# EUROPEAN PATENT SPECIFICATION

(11) **EP 2 599 640 B1**
(45) Date of publication and mention of the grant of the patent: **10.12.2014**
(21) Application number: 13000962.4
(22) Date of filing: 07.08.2007
(51) Int. Cl.: B60B 27/00, B21J 5/06, B21K 1/12, F16C 19/18, F16C 33/64

(54) **Bearing unit and method for producing a raceway ring member for a bearing unit**
Lagereinheit und Verfahren zur Herstellung eines Lagerbahnringelementes für eine Lagereinheit
Unité de palier et procédé de production d'un élément de bague à chemin de roulement pour unité de palier

(30) Priority: 07.08.2006 JP 2006214744; 21.08.2006 JP 2006224553; 21.08.2006 JP 2006224554; 23.08.2006 JP 2006226849
(43) Date of publication of application: 05.06.2013
(62) Divisional of application: 07792081.7
(73) Proprietor: NSK Ltd., Tokyo 141-8560 (JP)
(72) Inventor: Kazuto, Kobayashi, Fujisawa-shi Kanagawa, 251-8501 (JP); Kiyoshi, Ootsuka, Fujisawa-shi Kanagawa, 251-8501 (JP); Tatsuo, Wakabayashi, Fujisawa-shi Kanagawa, 251-8501 (JP); Yuu, Yasuda, Fujisawa-shi Kanagawa, 251-8501 (JP); Masato, Nagano, Fujisawa-shi Kanagawa, 251-8501 (JP); Kenichi, Nagai, Fujisawa-shi Kanagawa, 251-8501 (JP)
(74) Representative: Grünecker, Kinkeldey, Stockmair & Schwanhäusser

(56) References cited:
- EP-A2- 1 647 418
- JP-A- 2003 002 003
- JP-A- 2003 025 803

## Description

### Technical Field

The present invention relates to a method for manufacturing of at least one of first and second raceway rings of a bearing unit according to the preamble of claim 1 and as it is disclosed in JP 2003025803A.

### Background Art

Conventionally, there have been known various types of bearing units for supporting a wheel of a motor vehicle (for example, a disc wheel) rotationally on a vehicle body (for example, a suspension system (a suspension) (for example, refer to Patent Document No. 1). For example, a bearing unit for a drive wheel is shown in Fig. 6(a), and the bearing unit includes an outer ring (also referred to as a stationary ring, one of raceway rings, and an outside diameter side raceway ring member) 2 which is fixed to the side of the vehicle body and is held in a non-rotating state at all times, a hub (also referred to as a rotational ring, and the other of the raceway rings) 4 which is provided in such a manner as to face an inside of the outer ring 2 and is connected to the side of the wheel in such a manner as to rotate together with the wheel, and double row of rolling elements 6, 8 which are rotationally built in between the outer ring 2 and the hub 4.

In this case, the outer ring 2 is formed into a hollow cylindrical shape and is disposed in such a manner as to cover an outer circumference of the hub 4, seal members (a lip seal 10a on the wheel side, a pack seal 10b on the vehicle body side) are provided between the outer ring 2 and the hub 4 for hermetically sealing off an interior of the bearing unit. In addition, the lip seal 10a is fixed to a wheel-side fixing surface 2n-1 of the outer ring 2 and is positioned slidably relative to a sliding surface 4n-1 of the hub 4, while the pack seal 10b is fixed to a vehicle body-side fixing surface 2n-2 of the outer ring and is positioned slidably relative to an inner ring 16 (also referred to as a rotational ring constituent element), which will be described later. In addition, while balls are illustrated as the rolling elements 6, 8 in the figure, there may be a case where rollers are used depending upon configurations and types of bearing units.

A connecting flange 2a (also referred to as a fixing flange) is molded monolithically on the outer ring 2 in such a manner as to project outwards from an outer circumferential side thereof. Fixing bolts (not shown) are inserted into fixing holes 2b in the fixing flange 2a to be fastened to the vehicle body side, whereby the outer ring 2 can be fixed to a suspension system (a knuckle), not shown. In addition, a substantially cylindrical hub main body 12 (also referred to as the other of the raceway ring members, an inside diameter side raceway ring member and a spindle), which supports, for example, a disk wheel (not shown) of a motor vehicle and rotates together with the disc wheel, is provided on the hub 4, and a mounting flange 12a (also referred to as a hub flange) to which the disc wheel is fixed is provided on the hub main body 12 in such a manner as to project therefrom.

The mounting flange 12a extends outwards (radially outwards of the hub main body 12) beyond the outer ring 2, and a plurality of hub bolts 14 (also referred to as studs) is provided in the vicinity of an extending edge thereof in such a manner as to be disposed at predetermined intervals along a circumferential direction. In this case, by inserting the plurality of hub bolts 14 into bolt holes (not shown) formed in the disc wheel and being fastened with hub nuts (not shown), the disc wheel can be positioned and fixed to the mounting flange 12a. As this occurs, a radial position of the wheel is implemented by a positioning cylindrical portion (also referred to as a pilot portion) which is provided on a wheel side of the hub main body 12 in such a manner as to project therefrom.

In addition, the annular inner ring 16 (which makes up the hub 4 together with the hub main body 12) is fitted on a vehicle body-side fitting surface 4n-2 of the hub main body 12. In this case, after the inner ring 16 is fitted on the fitting surface 4n-2 to a stepped portion 12b formed thereon in such a state that the rolling elements 6, 8 are held with a cage 18, for example, between the outer ring 2 and the hub 4, a clamping area at a vehicle body-side axial end portion of the hub main body 12 is plastically deformed. Then, the clamping area (axial end portion) 12c is clamped to (is brought into tight contact with) a circumferential end portion 16s of the inner ring 16 therealong, whereby the inner ring can be locked on the hub main body 12.

As this occurs, a state is produced in which a predetermined preload is given to the bearing unit, and in this state, the rolling elements 6, 8 are built in rotationally between the outer ring 2 and the hub 4 so as to be brought into contact with raceway surfaces (outer ring raceway 2s, inner ring raceway 4s) of the outer ring 2 and the hub 4 while forming predetermined contact angles, respectively. In this case, lines of action (not shown) which each connect two contact points intersect the respective raceway surfaces 2s, 4s at right angles while passing through the centers of the rolling elements 6, 8 and intersect each other at one point (a point of action) on a center line of the bearing unit, whereby a back-to-back duplex (DB) bearing is configured.

Note that in the configuration like this, a force acting on the wheel while the motor vehicle is running is all transmitted from the disc wheel to the suspension system via the bearing unit. As this occurs, various types of loads (radial load, axial load, moment load and the like) are caused to act on the bearing unit. However, since the bearing unit is formed into the back-to-back duplex (DB) bearing, high rigidity is maintained with respect to the various types of loads.

In addition, a constant velocity joint (CVJ), not shown, is connected to the bearing unit. Specifically speaking, the constant velocity joint and the bearing unit are connected to each other by bringing an outer ring of the constant velocity joint into abutment with the hub 4 (the clamping area 12c of the hub main body 12) of the bearing unit, causing a spline shaft (not shown) of the constant velocity joint to fit in a spline hole 12h in the hub main body 12 and fixing a leading end of the spline shaft so fitted into the positioning cylindrical portion 12d with a nut (not shown). In this configuration, a driving force of a predetermined torque is transmitted smoothly to the disc wheel via the bearing unit, for example, by a free angular change of the constant velocity joint in association with an angular change of a drive shaft.

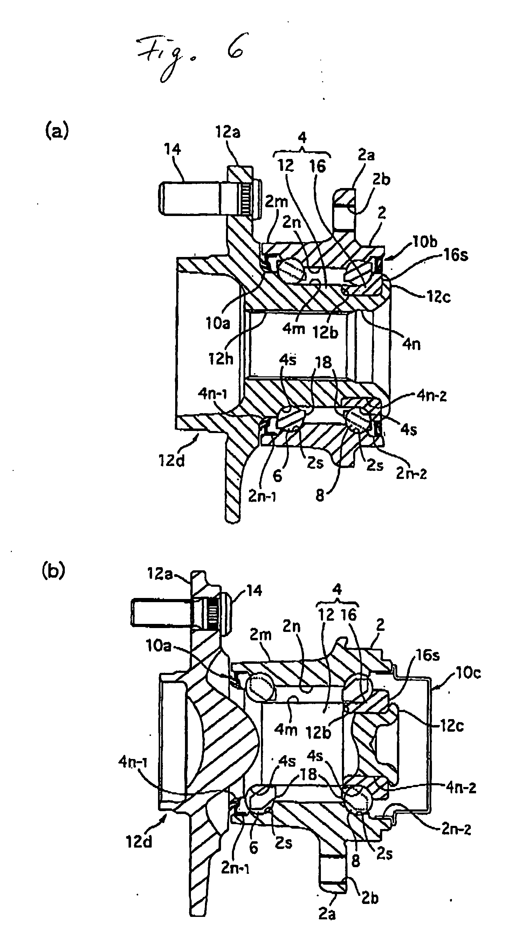

On the other hand, for example, a bearing unit for a driven wheel is shown in Fig. 6(b). In the bearing unit, a spline hole is not provided in a central portion of a hub main body 12. In addition, as seal members for hermetically sealing off an interior of the bearing unit, a cover 10c is provided on the side of a vehicle body in place of the pack seal. The cover 10c is formed into a disc shape so as to hermetically seal off the interior of the bearing unit on the side of the vehicle body from the outside of the bearing unit and is fixed to a fixing surface 2n-2 of an outer ring 2 at a proximal end thereof. Note that since the other configurations of this bearing unit are the same as those of the bearing unit (Fig. 6(a)) for a drive wheel described above, in Fig. 6(b), like reference numerals are given to those like constituent members, and the description thereof will be omitted.

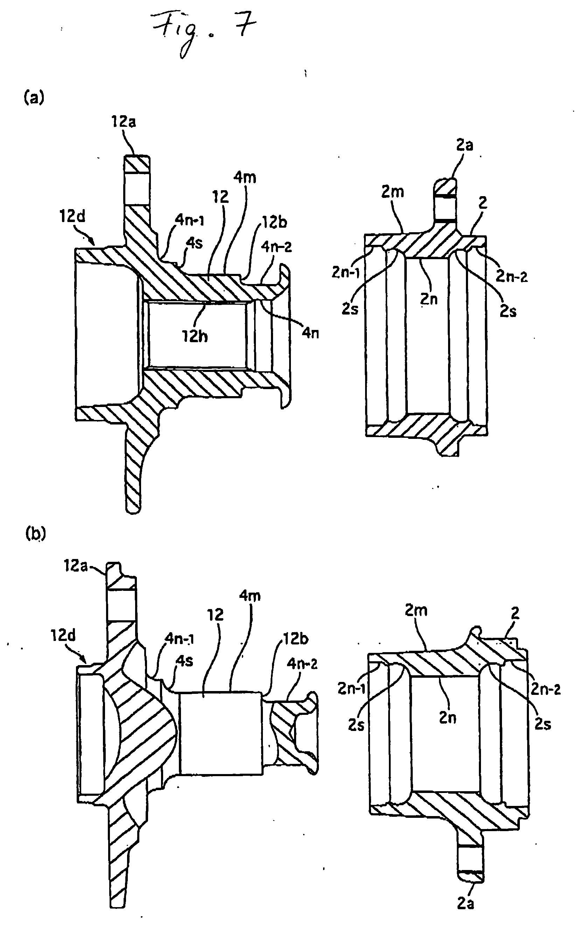

Incidentally, in the bearing units shown in Figs. 6(a) and 6(b), as shown in Figs 7(a) and 7(b), the positioning cylindrical portion 12d is provided on the wheel side of the hub main body 12 which makes up the hub 4, and the mounting flange 12a and the sliding surface 4n-1 of the lip seal 10a, the inner ring raceway 4s and the stepped portion 12b, and the inner ring 16 fitting surface 4n-2 are integrated into the outer circumferential surface 4m of the hub main body 12, whereby the hub main body 12 is formed into the complex configuration.

On the other hand, on the outer ring 2, the connecting flange 2a is integrated into the outer circumferential surface 2m, and the fixing surface 2n-1 of the lip seal 10a or to which the lip seal 10a is fixed and the double row outer ring raceways 2s, and the fixing surface 2n-2 of the seal member (the pack seal 10b in Fig. 6(a), the cover 10c in Fig. 6(b)) or to which the seal member is fixed are integrated into the inner circumferential surface 2n thereof, whereby the outer ring 2 is formed into the complex configuration. In addition, in particular, in the bearing unit for a driving unit in Fig. 6(a), the spline hole 12h is integrated into the inner circumferential surface 4n of the hub main body 12.

Because of this, it has been general practice to form the conventional hub main body 12 through hot forging. In addition, the outer ring 2 is formed into the hollow configuration, and hence, separate punching work becomes necessary for punching out a central portion of a material to form the outer ring 2. In this case, since the processing costs are increased, it has also been general practice to form the conventional ring 2 through hot forging.

It is general in forming the raceway rings 2, 4 through hot forging to obtain final configurations thereof through several steps starting with upsetting a material to punching (trimming) the same, and the material is heated up to about 1100°C before the first step so as to maintain a temperature of A3 transformation point (about 800°C) or higher until the end of the final step. In addition, after the completion of the final step, the material is subjected to slow cooling with a view to preventing the increase in hardness of the material in consideration of mechanical working that will be performed on the material following to the final step. In this case, since oxidation or decarburization is produced on the surface of the material, machining is performed on portions of the material where high dimension accuracy and strength are required.

However, in the machining that is performed on the material, since the surface of the material which is roughened due to the surface being oxidized or decarburized is subjected to chucking (or the material is worked while being grasped by jaws), there occurs a case where the centers of the machined material surface and the hot forged material surface become out of alignment, and there may be caused, for example, a risk that the rotational balance of the hub 4 (the hub main body 12) which is the rotational ring is lost. As this occurs, there may be caused a fear that the rotary performance of the bearing unit becomes difficult to be maintained over a long period of time.

On the other hand, although an increase in thickness of the material to such an extent that nothing is affected by the centers which are out of alignment has been proposed to the outer ring 2 which is the stationary ring, when the proposal is adopted, not only will the material costs be increased but also the weight of the outer ring 2 is increased by the extent that the thickness of the material is so increased. Therefore, it becomes difficult to realize a reduction in overall weight of the bearing unit. In the event that the thickness of the material is increased, the machining allowance for the material when the material is machined is increased, whereby not only is the working time increased but also the working cost is increased, as a result of which the manufacturing cost of the outer ring 2 is increased.

In addition, in slow cooling after hot forging, although the material is maintained in a relatively soft state in consideration of machine working efficiency, in this case, root portions (which are preferably kept hard) of the connecting flange 2a of the outer ring 2 and the mounting flange 12a of the hub main body get soft. When machine working is performed in this state, the connecting flange 2a and the mounting flange 12a are sometimes deformed or inclined due to a pressure applied thereto when machine working is performed thereon. As this occurs, the suspension system (the knuckle) and the disc wheel cannot be fixed accurately and rigidly on the connecting flange 2a and the mounting flange 12a, respectively, as a result of which there is caused a fear that it becomes difficult to stably support the wheel of the motor vehicle on the suspension system.

To avoid this, although the thickness of the root portions of the connecting flange 2a and the mounting flange 12a may be increased to reinforce the root portions, in the event that the thickness is so increased, the overall weight of the bearing unit is increased. Since the bearing unit makes up part of the unsprung load and constitutes a bearing unit which supports the wheel directly, there is caused a fear that the lost of rotation balance and increase in weight of the bearing discussed above are linked up with a reduction in running stability and controllability of the wheel.

In addition, for example, Patent Document No. 2 proposes a technique in which a hub main body 12 is formed by performing cold forging work on a sheet material. According to this technique, the occurrence of oxidation or decarburization on the surface of the forged product can be suppressed, and the finishing accuracy can also be increased. In this case, since there is no need to perform any machining on the material, the conventional problem that the rotation balance of the hub main body 12 is lost becomes difficult to be caused. However, since the hardness of an axial end portion of the hub main body 12 becomes higher than the hardness of a root portion of a mounting flange 12a when the sheet material is subjected to cold forging, clamping work, in which the axial end portion is plastically deformed so as to lock an inner ring 16 on to the hub main body 12, becomes sometimes difficult. In addition, when the sheet material is worked to produce the hub main body 12, it becomes difficult to work the sheet material to project into a brake positioning cylindrical portion or a wheel positioning cylindrical portion, and hence, there has been a need to provide an intermittent pilot on the hub main body as seen in Patent Document No. 2 or to fit a separate pilot on the hub main body.

Then, although the development of a bearing unit is desired which enables the inner ring 16 to be locked on to the hub main body 12 with good efficiency by realizing the facilitation of clamping work, no such bearing unit has ever been made known.

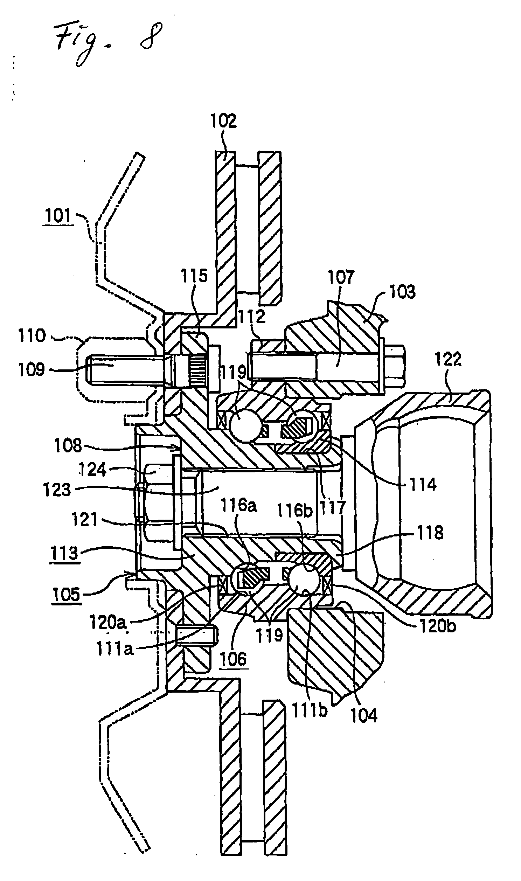

In addition, Fig. 8 shows another bearing unit (also referred to as a wheel supporting hub unit) 105 for a drive wheel. A wheel 101 which makes up a wheel of a motor vehicle and a rotor 102 which is a braking rotary member and which makes up a disc brake which constitutes a brake system are rotatably supported on a knuckle 103 which makes up a suspension system. Namely, an outer ring 106 which makes up a wheel supporting hub unit 105 is fixed into a circular supporting hole 104 portion formed in the knuckle 103 with a plurality of bolts 107. On the other hand, the wheel 101 and the rotor 102 are connected and fixed on to a hub 108 which makes up the wheel supporting hub unit 105 with pluralities of studs 109 and nuts 110. In addition, double row outer ring raceways 111a, 111b and a connecting flange 112 are formed on an inner circumferential surface and an outer circumferential surface of the outer ring 6, respectively. By connecting the connecting flange 112 to the knuckle 103 with the bolts 107, the outer ring 106 is fixed to the knuckle 103.

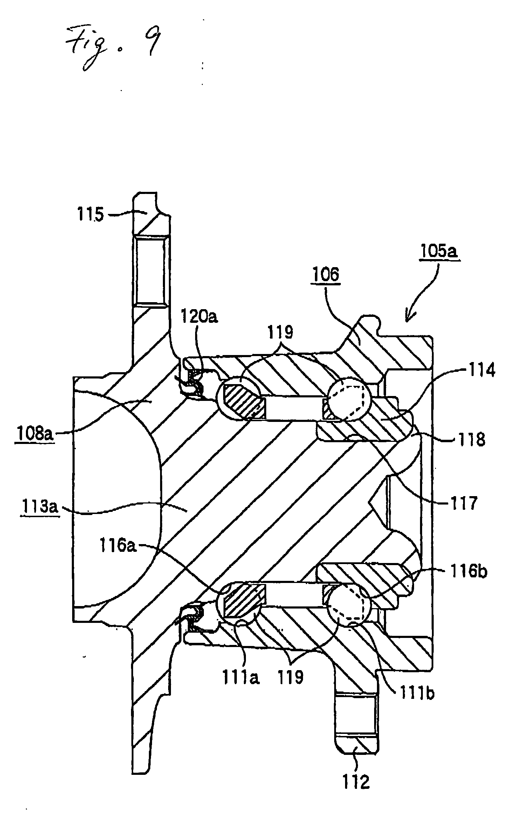

In addition, the hub 108 is made up of a hub main body 113 and an inner ring 114. Of these, a mounting flange 115 is formed on part of an outer circumferential surface of the hub main body 113 in a portion which projects from an outer end opening of the outer ring 106. Note that "out" with respect to the axial direction means the left side of Figs. 8, 9 which is an outer side of the bearing unit in a transverse direction of the vehicle with the bearing unit built on the motor vehicle. On the contrary, the right side of Figs. 8, 9 which is a central side of the bearing unit in the transverse direction of the vehicle with the bearing unit built on the motor vehicle means "in" with respect to the axial direction. The wheel 101 and the rotor 102 are connected and fixed to an outer surface of the mounting flange 115 with the studs 109 and nuts 110.

Additionally, an inner ring raceway 116a, which faces the outside outer ring raceway 111a of the double row outer ring raceways 111a, 111b, is formed on the outer circumferential surface of the hub main body 113 in an intermediate portion. In addition, the inner ring 114 is fitted on a small diameter stepped portion 117 formed similarly on an inner end portion. An inner ring raceway 116b, which faces the inside outer ring raceway 111b of the double row outer ring raceways 111a, 111b, is formed on an outer circumferential surface of the inner ring 114. The inner ring 14 configured like this is fixed to the hub main body 113 by a clamping portion 118 which is formed by plastically deforming the inner end portion of the hub main body 113 radially outwards. In addition, double row rolling elements 119, 119 are provided rollably between the outer ring raceways 111a, 111b and the inner ring raceways 116a, 116b, respectively. Note that while in the illustrated example, balls are used as the rolling elements 119, 119, in the case of an automotive hub unit which is heavy in weight, tapered rollers are sometimes used. In addition, openings at ends of the cylindrical space where the rolling elements 119, 119 are installed are hermetically sealed by seal rings 120a, 120a, respectively.

Furthermore, in the illustrated example, since the bearing unit is the wheel supporting hub unit 105 for the drive wheel (the front wheel of an FF vehicle, a rear wheel of an FR or RR vehicle, any wheel of a 4WD vehicle), a spline hole 121 is formed in a central portion of the hub 108. In addition, a spline shaft 123 which is fixedly provided at an outer end face of a constant velocity joint outer ring 122 is inserted into the spline hole 123. In association with this, a nut 124 is thread fitted on a leading end portion of the spline shaft 123, and then by fastening the nut 124 so fitted, the hub main body 113 is held between the nut 124 and the constant velocity joint outer ring 122.

Next, as a wheel supporting hub unit which has conventionally been known, Fig. 9 shows another hub unit for a driven wheel (a rear wheel of an FF vehicle, a front wheel of an FR vehicle or RR vehicle). Since the wheel supporting hub unit 105a is for a driven wheel, no spline hole is provided in a central portion of a hub main body 113a which makes up a hub 108a. Note that while in the illustrated example, an inner end face of an inner ring 114 is held by a clamping portion 118 provided at an inner end portion of the hub main body 113a, the inner end face of the inner ring 114 can also be held by a nut which is thread fitted on the inner end portion of the hub main body 113a. In this case, an external thread portion, on which the nut is to be thread fitted, is provided at the inner end portion of the hub main body 113a. The construction and function of the other portions are similar to those of the wheel supporting hub unit 105 which has been described before.

Incidentally, in the case of either of the constructions of the wheel supporting hub units 105, 105a which are configured as have been described above, a connecting flange 112 and a mounting flange 115 are formed on an outer circumferential surface of the outer ring 106 and an outer circumferential surface of the hub main body 113, 113a, respectively. As a method for manufacturing the outer ring 106 or the hub main body 113, 113a on the outer circumferential surface of which the connecting flange 112 or the mounting flange 115 is formed in such a manner as to project radially therefrom, cutting is considered in addition to the plastic forming such as hot forging or cold forging.

However, in order to realize a cost reduction by improving working efficiency and securing the yield of material, plastic forming is preferably used. In addition, in the plastic forming, since the hot forging enables work to be worked in a soft state, the forming load is suppressed to a small level. On the contrary, since the extent, to which the metal materials in the constituent components are hardened, is limited (does not surpass such an extent that the hardness increases as the temperature decreases) even after the metal materials are cooled after the completion of working, a sufficient strength may not always be obtained. In addition, since a difference in thermal expansion between forging dies needs to be taken into consideration, it becomes difficult to secure dimension accuracy and shaping accuracy. On the other hand, the strength of the base of the connecting flange 112 formed on the outer circumferential surface of the outer ring 106 or the base of the mounting flange 115 formed on the outer circumferential surface of the hub main body 113a needs to be secured in order to prevent the occurrence of harmful deformation thereat whether or not a moment is exerted thereto when in use. When the outer ring 106 or the hub main body 113, 113a is formed through the hot forging, it becomes difficult to give a required strength to the base of the connecting flange 12a or the mounting flange 115 in the event that the base is left as it is. Because of this, a separate operation needs to be performed in order to increase the strength of the base, this increasing the manufacturing costs of the outer ring 106 or the hub main body 113, 113a.

In addition, with the hot forging, since the dimension accuracy becomes rough and a decarburized layer needs to be removed from the thermally treated portion, a large cutting allowance for a posterior step becomes necessary, and hence, the hot forging approach has had the problem of increased manufacturing costs.

In contrast to this, as is described in Patent Document No. 3, it is considered to manufacture an outer ring 106 or a hub main body 113, 113a having on its own outer circumferential surface a connecting flange 112 or a mounting flange 115 through a side extrusion which is one of cold forging approaches. Figs. 20 to 21 show states in which an outer ring 106 or a hub main body 113a which is a raceway ring member for a bearing unit is manufactured through such a side extrusion as described in Patent Document No. 3. Note that Fig. 20 shows the state in which the outer ring 106 which makes up the wheel supporting rolling element bearings 105, 105a for a drive wheel which are shown in Figs. 18 to 19 is formed and Fig. 21 shows the state in which the hub main body 113a which makes up the wheel supporting rolling element bearing 105a for a driven wheel which is shown in Fig. 19 is formed.

In either of the cases, a material 125, 125a of which an outer circumferential surface is made into a cylindrical surface or a stepped cylindrical surface is set within a mold 128, 128a which is made up of an upper die 126, 126a and a lower die 127, 127a which have inner surface configurations matching an outer surface configuration of the connecting flange 12 or the mounting flange 15. In this state, portions of the outer circumferential surface of the material 125, 125a which exclude a portion where the connecting flange 112 or the mounting flange 115 is to be formed are held. On the other hand, a space 129, 129a which matches the flanges 112, 115 exists around the perimeter of the portion where the connecting flange 112 or the mounting flange 115 is to be formed. In the event that the material 125, 125a is pressed axially (the axial dimension is contracted) by a punch 130, 130a in this state, the metal material which has then nowhere to escape as the axial dimension shortens is pushed into the space 129, 129a, whereby the connecting flange 112 or the mounting flange 115 is eventually formed on part of the outer circumferential surface.

In the event that the outer ring 106 or the hub main body 113a which includes the connecting flange 112 or the mounting flange 115 is manufactured through the side extrusion that has been described above, the strength of the base of the connecting flange 112 or the mounting flange 115 which is formed on the outer circumferential surface of the outer ring 106 or the hub main body 113a can be increased. Namely, since the connecting flange 112 or the mounting flange 115 including the base is work hardened, the necessity of a posterior treatment to increase the strength of the base is obviated, or even though such a posterior treatment is necessary, a simple posterior treatment will suffice, and hence, a reduction in manufacturing costs of the outer ring 106 or the hub main body 113a is realized. In addition, since the difference in thermal expansion between the forging dies does not have to be taken into consideration, the dimension accuracy and shaping accuracy are easy to be secured, and the posterior working can be simplified or omitted, thereby making it possible to realize the reduction in manufacturing costs from this aspect.

However, in order to increase further the strength of the base of the connecting flange 112 or the mounting flange 115 with a view to realizing a reduction in weight or the like, there still remains a room for improvement even with the manufacturing method described in Patent Document No. 3 that has been described above. Namely, as is widely known in the field of automotive technologies, in order to realize an increase in driving performance centered at riding comfort, steering stability and the like or fuel economy, it is effective to reduce the so-called unsprung load which is the weight of the members which lie closer to the road surface than the spring which makes up the suspension system. Needless to say, the outer ring 106 or the hub main body 113a which includes the connecting flange 112 or the mounting flange 115 constitutes the unsprung load, and reducing the weight of the outer ring 106 or the hub main body 113a (as well as the hub main body 113) even slightly becomes very advantageous from the viewpoint of increasing the aforesaid performances.

In order to enable a reduction in thickness of the connecting flange 112 or the mounting flange 115 with a view to reducing the weight of the outer ring 106 or the hub main body 113, 113a, it becomes advantageous to increase the strength of the connecting flange 112 or the mounting flange 115, in particular, the strength of the base to which a large moment is exerted while the vehicle is turning. From this viewpoint, the manufacturing method described in Patent Document No. 3 above still has the room for improvement.

In addition, in the case of a bearing unit of this type, a wheel mounting surface of the connecting flange 12 or a vehicle body mounting surface of the mounting flange 115 needs to be finished with good flatness accuracy in order to secure runout accuracy. In the related art disclosed in Patent Document No. 3, finishing the mounting surface with good flatness accuracy is designed to be implemented by cutting.

However, when attempting to finish the mounting surface by cutting, since conventionally, the whole area of the mounting surface of the mounting flange 112 or the connecting flange 115 was such as to be brought into abutment with the wheel or the vehicle body, the whole area of the mounting surface needed to be cut. Consequently, a problem has still remained that should be solved with respect to the manufacturing costs of the flanged raceway ring member (time related manufacturing costs or labor-hour related manufacturing costs).

Patent Document No. 1: Japanese Patent Unexamined Publication JP-A-2005-256897
Patent Document No. 2: Japanese Patent Unexamined Publication JP-A-2003-25803
Patent Document No. 3: Japanese Patent Unexamined Publication JP-A-2006-111070

### Disclosure of the Invention

### Problem that the Invention is to Solve

The invention has been made in view of the situations, and an object thereof is to provide a bearing unit which can reduce costs associated with plane finishing while maintaining plane finishing accuracy with which a flange of a wheel or vehicle body mounting plane is finished.

### Means for Solving the Problem

According to the invention, there is provided a bearing unit raceway ring member manufacturing method of at least one of the raceway rings of the inventive bearing unit, including the features of claim 1.

Further embodiments of the invention are outlined in the dependent claims.

### Advantage of the Invention

According to the invention, the bearing unit can be provided which can reduce costs involved in finishing the wheel or vehicle body mounting surface area of the flange provided on one or both of the raceway ring members by maintaining the flatness finishing accuracy of the wheel or vehicle body mounting surface area.

### Brief Description of the Drawings

[Fig. 1]A schematic sectional view showing an embodiment of a bearing unit of the invention.
[Fig. 2] A schematic sectional view of a mold which is used in a half die cutting step, which shows a state in the half die cutting step is carried out.
[Fig. 3] A drawing schematically showing a step example 1.
[Fig. 4] A drawing schematically showing a step example 2.
[Fig. 5] An enlarged sectional view showing a half die cutting step.
[Fig. 6] (a) is a sectional view showing the configuration of a bearing unit for a drive wheel, and (b) is a sectional view showing the configuration of a bearing unit for a driven wheel.
[Fig. 7] (a) is a sectional view showing a hub for a drive wheel and one of raceway rings in an exploded fashion, and (b) is a sectional view showing a hub for a driven wheel and one of raceway rings in an exploded fashion.
[Fig. 8] A sectional view showing another example of a wheel supporting hub unit for a drive wheel with the hub unit assembled on a knuckle.
[Fig. 9] A sectional view showing another example of a wheel supporting hub unit for a driven wheel with the hub unit assembled on a knuckle.

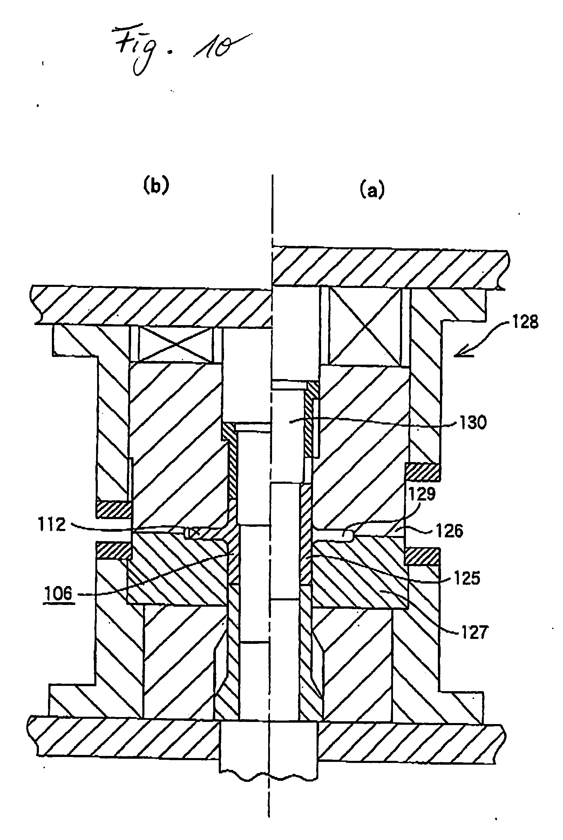

[Fig. 10] A sectional view showing a state in which an outer ring which makes up a wheel supporting bearing unit is manufactured by a conventionally known side extrusion process by a state immediately before the start of the process and a state immediately after the completion of the process.

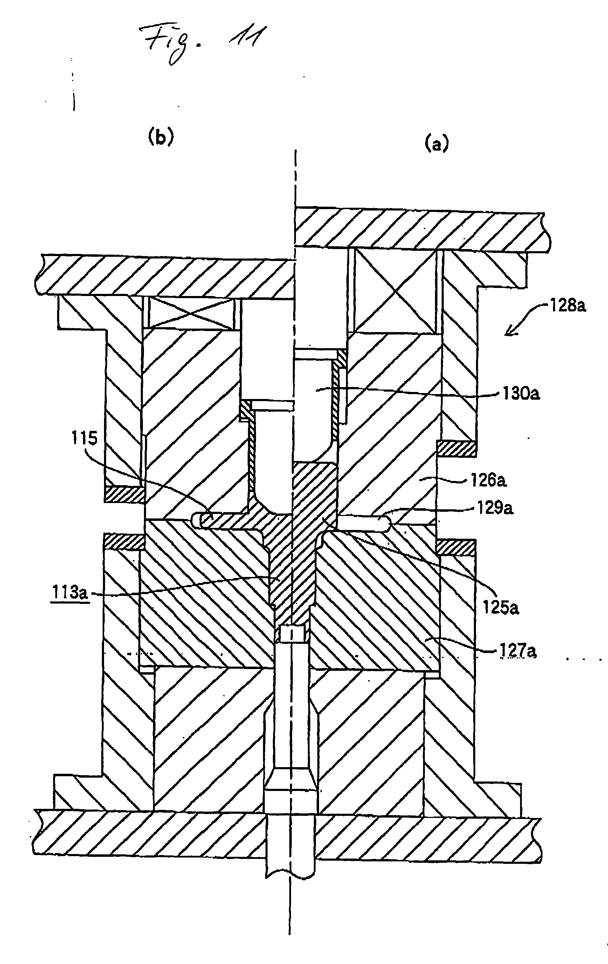

[Fig. 11]A sectional view showing a state in which a hub main body which makes up a wheel supporting bearing unit for a driven wheel is manufactured by a conventionally known side extrusion process by a state immediately before the start of the process and a state immediately after the completion of the process.

### Description of Reference Numerals

- 2, 106, 204: outer ring (one of raceway rings, outside diameter side raceway ring member);
- 2a, 112, 204c: connecting flange;
- 2s, 111a, 111b: outer ring raceway;
- 4, 108, 108a, 201: hub (the other raceway ring);
- 4s, 116a, 116b: inner ring raceway;
- 6, 8, 119: rolling element;
- 12, 113, 113a, 202: hub main body (the other raceway ring member, inside diameter side raceway ring member);
- 12a, 115, 202c: mounting flange;
- 12c: axial end portion (clamping area) of the other raceway ring member;
- 101: wheel;
- 102: rotor;
- 103: knuckle;
- 104: supporting hole;
- 105, 105a: wheel supporting hub unit;
- 107: bolt;
- 109, 202g: stud (bolt);
- 110: nut;
- 114: inner ring;
- 117: small diameter stepped portion;
- 118: clamping portion;
- 120a, 120b: seal ring;
- 121: spline hole;
- 122: constant velocity joint outer ring;
- 123: spline shaft;
- 124: nut;
- 125, 125a: material;
- 126, 126a, 126b: upper die;
- 127, 127a: lower die;
- 128, 128a: mold;
- 129, 129a: space;
- 130, 130a: punch;
- 230: projecting portion

### Best Mode for Carrying out the Invention

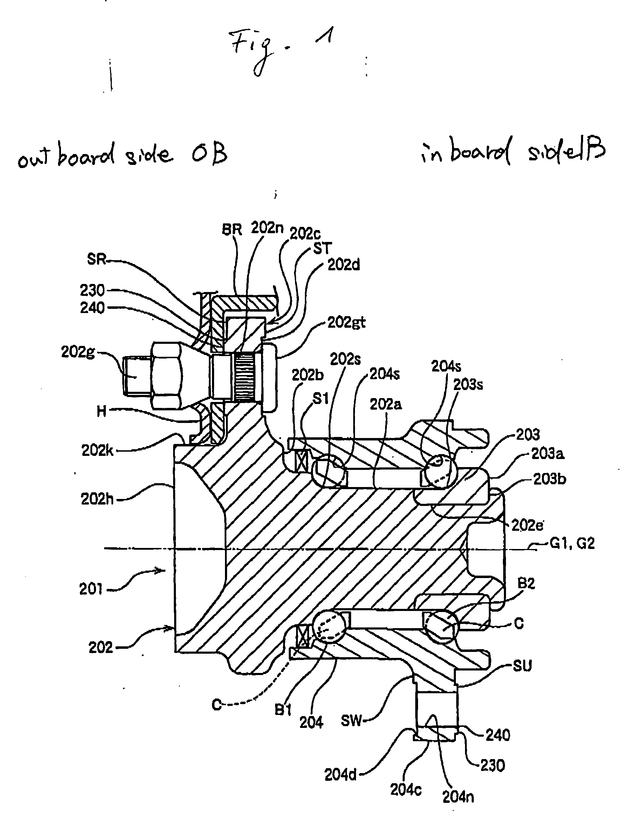

Next, a bearing unit according to the invention will be described by reference to Figs. 1 to 5. As shown in Fig. 1, the bearing unit of this embodiment is made up of a hub (also referred to as the other raceway ring) 201 which constitutes a rotational ring, an outer ring (also referred to as one raceway ring) 204 which constitutes a stationary ring, a plurality of rolling elements (balls) B 1 ..., B2 ... which are built in rollably via a cage C between the hub 201 and the outer ring 204 and a seal member S1 which seals off an interior of the bearing unit between the hub 201 and the outer ring 204 at an outboard side. Sealing constructions in the known forms are selected for the seal member S 1 appropriately according to specifications which can prevent the leakage of a lubricant (for example, grease) sealed within the bearing to the outside of the bearing or intrusion of foreign matters (for example, water, dust) into the interior of the bearing.

In addition, in the embodiment, while the embodiment is described in which the outer ring 204 constitutes the stationary ring and the hub 201 constitutes the rotational ring, it is still within the scope of the invention in the event that the embodiment may be such that the outer ring constitutes the rotational ring and the hub constitutes the stationary ring.

The hub 201 is made up of a hub main body 202 and an inner ring (also referred to as a separate inner ring) 203 which is provided in such a manner as to be fitted on the hub main body 202.

The hub main body 202 is made up of a solid cylindrical shaft portion 202a, four coplanar (substantially rectangular as viewed from the front) mounting flanges 202c which are provided to project in such a manner as to intersect an axial direction at right angles via an annular rising wall 202b which is provided to erect vertically from the outboard side OB of the shaft portion 202a, an inner ring raceway (a first inner ring raceway) 202s which is provided annularly on an outer circumference lying closer to the rising wall 202b, and a stepped portion 202e which is provided by depressing a predetermined outer circumferential area on an inboard side IB one step lower than a predetermined outer circumferential area where the raceway surface 202s is provided.

A brake member (a brake rotor) BR and a wheel (a wheel) H are mounted on the mounting flange 202c via bolts (hub bolts) 202g.

In addition, A positioning cylindrical portion (a pilot portion) 202h which positions the wheel is provided on the hub main body 202 on the outboard side OB across the mounting flanges 202c or an opposite side to the shaft portion 202a across the mounting flanges 202c in such a manner as to project coaxially with the shaft portion 202a with a larger diameter than the shaft portion 202a.

In this embodiment, although an outer circumference 202k of the positioning cylindrical portion 202h is made into a constant plane (a straight plane) in the axial direction, a mode may be adopted in which the outer circumference is configured into a stepped configuration which is made up of a small diameter outer circumferential portion and a large diameter outer circumferential portion in that order from the outboard side OB.

In this embodiment, the mounting flanges 202c is provided in positions which are provided at intervals of 90 degrees in such a manner as to extend radially about a center axis G1 of the shaft portion 202a as a center, and a bolt hole (a bolt mounting hole) 202n which includes the bolt 202g projecting from a wheel mounting side surface SR is provided in a predetermined position on each mounting flange 202c. In this embodiment, the bolt holes are provided, respectively, in the predetermined positions on the four mounting flanges 202c, that is, on the same circumference centered at the center axis G1 of the shaft portion 202a.

The mounting flange 202c includes a projecting portion 230 in which a peripheral area of the bolt hole 202n from which the bolt 202g projects, that is, the peripheral area having a diameter larger than the bolt diameter is made to project into a cylindrical shape towards the wheel mounting surface side SR.

In addition, a top surface of the projecting portion 230 which is provided in such a manner as to project towards the wheel mounting surface side SR, that is, the peripheral area of the bolt hole 202n constitutes a mounting surface portion 240 with which a wheel side member is brought into abutment, and when fastening a wheel side member with the bolt 202g, the wheel side is brought into abutment with the peripheral area (the mounting surface portion 240) of the bolt hole 202n for mounting.

Consequently, according to the embodiment, the wheel mounting surface of the mounting flange 202c with which the wheel side member (in this embodiment, the brake rotor BR) is brought into abutment is not the whole area of the wheel mounting surface side SR of the mounting flange 202c but only the peripheral area (the mounting surface portion 240) of the bolt hole 202n of the projecting portion 230.

Note that the projecting height of the projecting portion 230 may be such as to project from the wheel mounting side surface SR other than the projecting portion 230 and the design with respect thereto can be changed within the scope of the invention.

In addition, the projecting shape of the projecting portion is not construed as being limited to the cylindrical shape as in the embodiment and the design with respect thereto may be changed within the scope of the invention so that it can be formed into, for example, an ellipse shape, an angular cylindrical shape and the like. The mounting surface portion 240 provided on the projecting portion 230 is finished with good flatness finishing accuracy so as to secure a runout accuracy.

In addition, in the embodiment, a bolt seat surface portion 202d is provided on an opposite surface (a non-wheel mounting side surface ST) to the wheel mounting side surface SR in such a manner as to be recessed so as to accommodate therein a head portion 202gt of the bolt 202g. Note that the design with respect to the depth of the recessed bolt seat surface portion 202d can be changed within the scope of the embodiment.

The separate inner ring 203 has an inside diameter which allows it to fit on a stepped portion 202e which is recessed at the inboard side IB on an outer circumference of the shaft portion 202a of the hub main body 202 and an outside diameter which allows it to be positioned on the same plane as the outer circumference of the hub main body 202 when the separate ring 203 is fitted on the hub main body 202 and is formed into a hollow cylindrical shape which includes a raceway surface (a second inner ring raceway) 203s which is provided annularly on the outer circumference in such a manner as to be adjacent to the first inner ring raceway 202s on the same plane at the hub main body 202 side. In addition, an inboard side end portion 203a of the separate inner ring 203 has a predetermined axial thickness and is formed into a larger diameter than an outer circumferential area including the second raceway surface 203s.

In addition, an axial end face 203b at the inboard side IB of the separate inner ring 203 clamps and fixes an axial end face 203b of the inboard side end portion 203a of the separate inner ring 203 by being plastically deformed when the inboard side end portion 203a of the hub main body 202 is oscillated and clamped.

The outer ring 204 is, as shown in Fig. 1, formed into a hollow cylindrical shape having substantially the same shaft length as the shaft portion 202a of the hub 201 and is disposed in such a manner as to cover the outer circumference of the shaft portion 202a.

An inside diameter of the outer ring 204 is formed into a larger diameter compared to an inside diameter of the shaft portion 202a so as to form a predetermined in-bearing space between an outside diameter of the shaft portion 202a and itself and two outer ring raceways, that is, a first outer ring raceway 204s and a second outer ring raceway 204s, are formed annularly on the inside diameter thereof at a predetermined interval (an interval corresponding to one at which the first inner ring raceway 202s and the second inner ring raceway 202s on the hub 201 side are provided) in an axial direction.

In addition, outer ring 204 side flanges (mounting flanges) 204c are provided on an outside diameter of the outer ring 204 in such a manner as to project therefrom, and bolts, not shown, are passed therethrough to be fastened to a vehicle body (for example a suspension system, not shown) side, whereby the outer ring 204 is fixed to the vehicle body.

In this embodiment, the outer ring 204 side flanges 204c are provided in positions which are provided in positions lying at intervals of 90 degrees in such a manner as to project radially about a center axis G2 of the outer ring 204 as a center, and bolt holes 204n from which bolts, not shown, are caused to project are provided, respectively, in predetermined positions on the flanges 204c, that is, on the same circumference centered at the center axis G2 of the outer ring 204.

The mounting flange 204c includes a projecting portion 230 in which a peripheral area of the bolt hole 204n from which the bolt 202g projects is made to project into a cylindrical shape from a vehicle body mounting side surface SU.

In addition, the projecting portion 230 which is provided in such a manner as to project from the vehicle body mounting side surface SU constitutes a mounting surface portion 240 with which a vehicle body side is brought into abutment, and when fastening a vehicle body side with the bolts, the vehicle body side is brought into abutment with the peripheral area of the bolt hole 204n for mounting.

Consequently, according to the embodiment, a vehicle body mounting surface with which a vehicle body (for example, a suspension system) is brought into abutment is not the whole area of the vehicle body mounting side surface SU of the flange 204c but only the peripheral area (the mounting surface portion 240) of the bolt hole 204n of the projecting portion 230.

Note that the projecting height of the projecting portion 230 may be such as to project from the vehicle body mounting side surface SU other than the projecting portion 230 and the design with respect thereto can be changed within the scope of the invention.

In addition, the projecting shape of the projecting portion 230 is not construed as being limited to the cylindrical shape as in the embodiment and the design with respect thereto may be changed within the scope of the invention so that it can be formed into, for example, an ellipse shape, an angular cylindrical shape and the like. The mounting surface portion 240 provided on the projecting portion 230 is finished with good flatness finishing accuracy so as to secure a runout accuracy.

In addition, in the embodiment, a bolt seat surface portion 204d is provided on an opposite surface (a non-vehicle body mounting side surface SW) to the vehicle body mounting side surface SU in such a manner as to be recessed so as to accommodate therein a head portion of the bolt. Note that the design with respect to the depth of the recessed bolt seat surface portion 204d can be changed within the scope of the embodiment.

While the mounting flanges 202c of the hub main body 202 and the flanges 204c of the outer ring 204 are made, respectively, into the four independent projecting flanges, the numbers of flanges on the hub main body 202 and the outer ring 204 can be increased or decreased as required within the scope of the invention, and the projecting shapes and projecting heights can also be changed arbitrarily. In this embodiment, in the respective flanges 202c, 204c, while the adjacent flanges are separate and independent from each other at a portion other than at proximal end sides thereof, a form may be adopted in which the adjacent flanges are connected to each other in the circumferential direction, and this form falls within the scope of the invention.

Here, the projecting portions 230 which are provided, respectively, on the mounting flanges 202c of the hub main body 202 and the flanges 204c of the outer ring 204 are formed through cold forging.

Hereinafter, a method of manufacturing the hub main body 202 of the bearing unit of the embodiment will be described by taking, as an example, steps of forming, in particular, the projecting portions 230 on the mounting flanges 202c of the hub main body.

In addition, while in the embodiment, the hub main body 202 is taken as the example for description, similar steps can be adopted for steps of forming the projecting portions 230 on the flanges 204c of the outer ring 204.

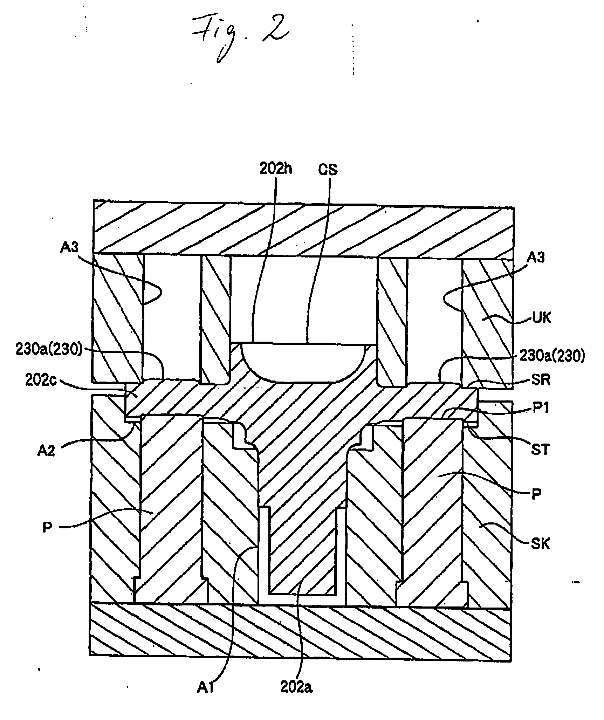

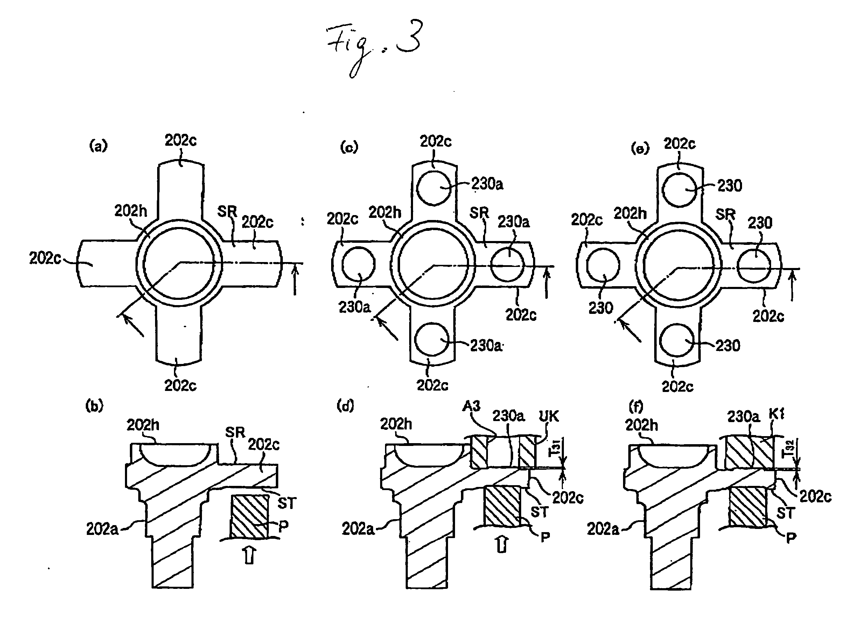

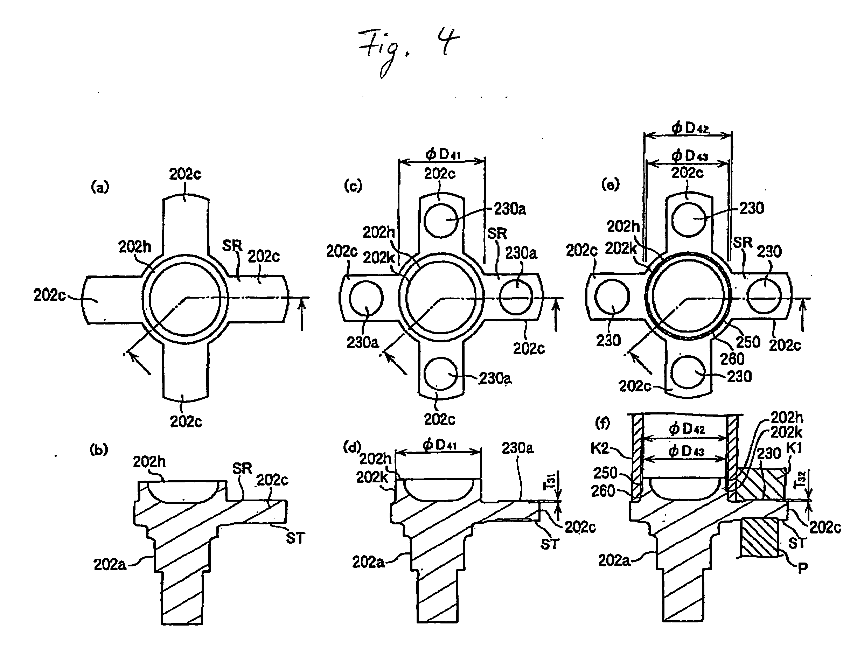

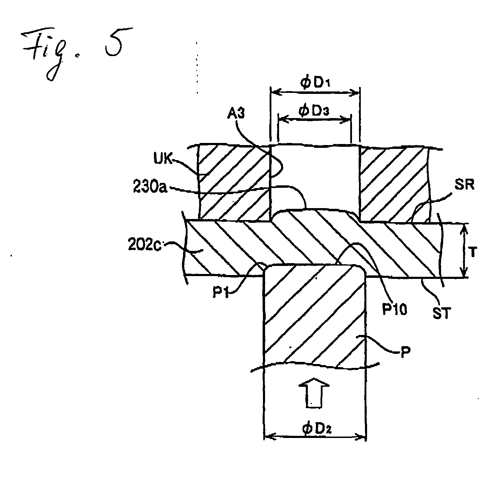

Fig. 2 shows an example of a mold for forming the projecting portions 230 on the flanges 202c of the hub main body 202 which makes up the hub 201 of the bearing unit of this embodiment. Fig. 3 is a schematic diagram showing an example of projecting portion forming steps (a step example 1), Fig. 4 is a schematic diagram showing the other example of projecting portion forming steps (a step example 2), and Fig. 5 is an enlarged sectional view showing a main part of Fig. 1.

Firstly, an intermediate material CS into which a shaft portion 202a, mounting flanges 202c and a positioning cylindrical portion 202h are integrated is formed from a solid bar material through steps of, for example, cold forward extrusion, cold bending, and cold side extrusion. Note that the manufacturing steps of the intermediate material CS are not such as to be construed as being limited to specific ones, and since the known cold forging steps or manufacturing methods which can be conceived within the scope of the invention can be adopted, a detailed description thereof will be omitted here.

Next, an example of projecting portion forming steps will be illustrated. Firstly, the step example 1 will be described.

In the step example 1, as shown in Fig. 3, projecting portions 230 are formed and finished according to a procedure of cold half die cutting step and cold upsetting step.

A mold used in the steps is, as shown in Fig. 2, made up of a lower die SK and an upper die UK. Fig. 2 shows a state in which the flanges 202c of the intermediate material CS are half punched and projecting portions 230 are formed on a wheel mounting surface side SR.

The lower die SK includes therein a cylindrical holding space A1 for holding the shaft portion 202a of the intermediate material CS and a plurality of holding spaces A2, rectangular as viewed from the top, which communicate with the holding space A1 and hold independently the flanges 202c, respectively, and also includes lower punches P which project, respectively, towards interiors of the holding spaces A2 with a predetermined height area.

The upper die UK includes cylindrical holes A3 which are provided at the same phase as the lower punches P of the lower die SK and in such a manner as to extend in a height direction so as to cause projecting portions 230 to be provided to project.

### (Half Punching Step)

Figs. 3(a) and 3(b) show the intermediate material, and this intermediate material CS is placed in the lower die SK shown in Fig. 2. As this occurs, non-wheel mounting surface sides ST of the flanges 202c of the intermediate material CS are riding, respectively, on upper end faces P1 of the lower punches P. Then, when the press is lowered to lower the upper die UK in this state, the upper die UK presses against the wheel mounting surface sides SR of the flanges 202c of the intermediate material CS (states shown in Fig. 2 and Figs. 3(c) and 3(d)).

By this, as shown in Fig. 2 and Figs. 3(c) and 3(d), half punching occurs between the holes A3 provided in the upper die UK and the lower punches P, and the material of the flanges 202c is pushed out to the wheel mounting surface side along the configurations of the holes A3, whereby projecting portions (projecting areas) 230 before upsetting are formed.

Then, in this case, the holes A3 provided in the upper die UK are preferably in the following relationship (refer to Fig. 5). Letting the diameter of the hole A3 be φD1 φD1 and the outside diameter of the lower punch P be φD2, the hole A3 should be adjusted so as to establish a relationship; φD1≤ φD2. In the event that the hole A3 is in a relationship; φD1 > φD2, not half die cutting but full punching results, and hence, the half die cutting step needs to be stopped in the midst thereof, and there occurs a possibility that a defect (a crack) is produced. Namely, by having the relationship described above, full punching can be prevented, and there is no need to stop the intended half die cutting in the midst thereof, whereby the projection of such a defect (a crack) can be prevented.

In addition, the upper end face of the lower punch P is formed into a curved surface R along an upper end edge (consequently, the diameter φD2 of the lower punch P becomes what results by adding the R's at the upper end edge P1 to the diameter φD3 of a flat surface P10). In addition, in this embodiment, for example, the diameter of the flat surface P10, which excludes the curved surface R of the upper end edge P1, is made to be a diameter which is equal to or larger than the diameter of a head portion 202gt of a bolt 202g.

In addition, in the event that the projecting portion 230a before upsetting is formed too large, since the flatness finishing accuracy becomes difficult to be obtained properly after upsetting, the diameter of the flat surface P10 is preferably made to be 1.5 times or less the diameter of the head portion 202gt of the bolt 202g.

### (Upsetting Step)

As shown in Figs. 3(e) and 3(f), after the half die cutting step has been finished, the projecting portion (the projecting area) 230a obtained at the half die cutting step, which has not yet been subjected to upsetting, is upset from above by a predetermined upsetting die (a die) K1.

By performing the upsetting step after the half die cutting step, the projecting portion 230 is obtained whose top surface is finished with good flatness accuracy. In addition, needless to say, the projecting height T32 of the projecting portion 230 after upsetting becomes lower than the projecting height T31 of the projecting portion 230a before upsetting (T31 > T32).

In this embodiment, since the mounting surface portion 240 of the projecting portion 230 is finished with high flatness accuracy by forming the mounting surface portion 240 by finishing the plane thereof at the same time as the upsetting step is performed after the half die cutting step, a separate finishing step such as cutting can be omitted. Consequently, since the costly cutting step which has conventionally been performed on the mounting surface portion can be eliminated, the manufacturing costs are largely reduced. Although the whole area of the wheel mounting surface side can be finished with good flatness accuracy by cold upsetting the same without adopting the steps (the half die cutting step and the upsetting step) of the embodiment, in the event that only the projecting portion 230 is cold upset as done in the embodiment, the upsetting area can be made small. Because of this, compared to the case where the whole area is cold upset, the projecting portion 230 can be finished with good accuracy by a relatively small load.

In addition, according to the embodiment, since the bolt seat surface portion 202d which is necessary on the non-wheel mounting surface side ST is formed at the same time as the half die cutting and upsetting steps of the projecting portion 230, the bolt seat surface portion 202d can be formed with good accuracy together with the projecting portion 230 and the outer circumference 202k of the positioning cylindrical portion 202h. Consequently, a cutting on the non-wheel mounting surface side ST can also be eliminated, thereby making it possible to realize a further reduction in manufacturing costs.

Additionally, while specific illustration is omitted, a hold hole 202n is provided in the projecting portion 230 which has been formed through the steps described above in such a manner as to pass therethrough after predetermined steps have been performed thereon. In providing the bolt hole 202n in this way, the relationship between φD1 and φD2 may be made into a relationship; φD1 + (0.02 to 0.13) T (thickness of flange) = φD2.

Next, the step example 2 will be described by reference to Fig. 4 as well.

This step example is an example in which an upsetting step and an ironing step for finishing the outer circumference of a positioning cylindrical portion are performed at the same time. Note that while in this step example, the upsetting step and the ironing step are performed at the same time, the "same time" does not mean here temporally the same time but means that both the steps are performed in the manufacturing process and includes a temporal delay therebetween.

In the conventional cutting step of the mounting surface side, in addition to the mounting surface portion, the positioning portion is also cut to be finished. Namely, in the event that the accuracy (diametrical dimension, roundness, perpendicularity and the like) of the positioning portion as well as the flatness accuracy of the mounting surface portion can be secured by finishing other than cutting, the cutting step for the mounting surface side can be eliminated entirely, thereby making it possible to reduce the manufacturing costs largely. The step example 2 is made in view of this point.

Note that a half die cutting step is identical to the half die cutting step in the step example 1 described before, the description thereof will be omitted here.

In this step example, an upsetting die (a die) K1 having an area (a die lower surface area) for upsetting after a half die cutting step a projecting portion 230 which has not yet been upset and a known ironing tool K2 for ironing the whole area of an outer circumference K of a positioning cylindrical portion 202h in a stepped fashion are used (refer to Figs. 4(e) and 4(f)).

Let the outside diameter of the outer circumference 202k of the positioning cylindrical portion 202h before ironing be φD41 (Figs. 4(c) and 4(d)), and the outer circumference 202k of the positioning cylindrical portion 202h after the ironing step is formed into a configuration which is made up of a small diameter portion 250 and a large diameter portion 260 arranged in that order from the outboard side OB, letting the outside diameters of the respective portions be φD43 (the outside diameter of the small diameter portion) and φD42 (the outside diameter of the large diameter portion 260), respectively. Namely, φD41 > φD42, φD42 > φD43.

Consequently, according to this step example, since the outer circumference 202k of the positioning cylindrical portion 202h can be ironed so as to obtain predetermined configuration and accuracy at the same time as the projecting portion 230 is upset to be formed using the predetermined upsetting die K1 and ironing tool K2, the outer circumference 202k of the positioning cylindrical portion 202h can be finished with good accuracy at the same time as the mounting surface portion 240 of the projecting portion 230 can be finished with good flatness accuracy. In addition, according to the step example, the perpendicularity with the mounting surface can also be secured. Consequently, the cutting step for the wheel mounting surface side SR of the flange 202c can be eliminated entirely, thereby making it possible to reduce the manufacturing costs largely.

Note that the function and advantage of the forming steps of the projecting portion 230 by the half die cutting step and the upsetting step are identical to those of the step example 1 that has been described before, the description thereof will be omitted here.

In addition, the upsetting step in the manufacturing steps can also be omitted (the manufacturing process is completed when only the steps shown in Fig. 2 and Figs. 3(c) and 3(d) have been completed). In addition, the description of the half die cutting step is the same as that of the step example 1, and hence, the description will be omitted here.

Namely, in this embodiment, since the projecting portion 230 is provided on the wheel mounting surface side SR of the flange 202c in such a manner as to project therefrom and the projecting portion 230 which so projects is made to function as the mounting surface portion 240 on which the wheel is mounted, even in the event that cutting is adopted, in place of the upsetting step, as finishing for obtaining the flatness accuracy of the mounting surface portion 240 after the half die cutting step, the surface to be finished is only the top surface of the projecting portion 230 which functions as the mounting surface portion 240 thereof.

Consequently, the surface area needing to be cut to be finished can be reduced largely, thereby making it possible to realize a reduction in manufacturing costs.

The bearing units of the embodiments can be applied to not only a bearing unit that is built in a driven wheel or drive wheel of a motor vehicle but also those used in various types of vehicles including railway vehicles. In addition, while the bearing units of the embodiments are of the type which is classified into the so-called third generation (also referred to as HUB III) in which flanges are provided on one raceway ring member and the other raceway ring member, respectively, the bearing units of the embodiments can also be applied to bearing units of third generation other than those of the embodiments, bearings of the type (the second generation) in which a double row angular ball bearing in which a flange is provided at the outboard side on the outer circumference of an outer ring of a back-to-back duplex bearing is fitted on an outer circumference of a hub or the bearing of second and half generation. Furthermore, while in the embodiments, the balls are described as functioning as rolling elements, rollers can be used without departing from the scope of the invention.

## Claims

1. A bearing unit raceway ring member manufacturing method of at least one of first and second raceway rings of the bearing unit the bearing unit comprising:
the first raceway ring (204) which is mounted on a vehicle body;
the second raceway ring (201) which is disposed to face the first raceway ring (204) and which is mounted on a wheel; and
a plurality of rolling elements (B1, B2) which are disposed rollably between raceway surfaces (204s, 201) which are formed, respectively, on facing surfaces of the first and second raceway rings (204, 201);
wherein at least one of the first and second raceway rings (204, 201) has flanges (204c, 202c) at which the at least one of the first and second raceway rings (204, 201) is mounted on the vehicle body or the wheel,
each of the flanges (204c, 202c) has a bolt mounting hole (204n, 202n) in which a bolt (202g) for fastening the vehicle body or the wheel is adapted to be mounted, and
each of the flanges (204c, 202c) includes a projecting portion (230) provided on a peripheral area of the bolt mounting hole (204n, 202n), the bearing unit raceway ring member manufacturing method comprising:
forming an intermediate material (CS) including the flanges (202c);
performing a cold half die cutting out process on each of the peripheral areas in which each bolt mounting hole (202n) is formed in the flange (202c) in such a manner as to project towards the vehicle body mounting side or the wheel mounting side; and **characterized in that** the peripheral area having a diameter lager than a diameter of the bolt, in such a manner as to project therefrom in a cylindrical shape towards the vehicle body mounting side or the wheel mounting side, and **in that** said manufacturing method further comprises
cold upsetting each of the peripheral areas which project towards the vehicle body mounting side or the wheel mounting side after the half die cutting step,
wherein the projecting portion (230) is formed by the half die cutting step and the cold upsetting step, and only the projecting portion (230) is cold upset.

2. The bearing unit raceway ring member manufacturing method according to claim 1, wherein a lower die (SK) and an upper die (UK) are used in the half die cutting step, wherein the lower die (SK) includes therein a cylindrical holding space (A1) for holding a shaft portion (202a) of the intermediate material (CS) and a plurality of holding spaces (A2), rectangular as viewed from the top, which communicate with the holding space (A1) and hold independently the flanges (202c), respectively, and also includes lower punches (P) which project, respectively, towards interiors of the holding spaces (A2) with a predetermined height area,
wherein the upper die (UK) includes cylindrical holes (A3) which are provided at the same phase as the lower punches (P) of the lower die (SK) and in such a manner as to extend in a height direction so as to cause the projecting portions (230) to project, and
wherein the outside diameter of each lower punch (P) is equal to or larger than the diameter of each cylindrical hole (A3).

3. The bearing unit raceway ring member manufacturing method according to claim 2, wherein the diameter of the flat surface (P10) of the upper end face of the lower punch (P), excluding the curved surface along the upper end edge (P1) of the lower punch (P), is equal to or larger than the diameter of a head portion (202gt) of the bolt (202g) and is 1.5 times or less than the diameter of the head portion (202gt) of the bolt (202g).

4. The bearing unit raceway ring member manufacturing method according to claim 1, wherein the second raceway ring (201) is made up of a hub main body (202) and an inner ring (203) which is provided in such a manner as to be fitted on the hub main body (202),
wherein the hub main body (202) comprises a shaft portion (202a) on one side of the flanges (202c) and a positioning cylindrical portion (202h) provided on the other side of the flanges (202c) to position the wheel, wherein the positioning cylindrical portion (202h) projects coaxially with the shaft portion (202a) with a larger diameter than the shaft portion (202a), and
wherein the bearing unit raceway ring member manufacturing method further comprises an ironing step for finishing the outer circumference of the positioning cylindrical portion (202h), wherein the upsetting step and the ironing step are performed at the same time.

## Patentansprüche

1. Ein Herstellungsverfahren einer Laufbahnringeinheit einer Lagereinheit zur Herstellung von zumindest eines einer ersten und zweiten Laufbahnringeinheit einer Lagereinheit, die Lagereinheit enthält:
den ersten Laufbahnring (204), welcher an einem Fahrzeugkörper angebracht ist;
den zweiten Laufbahnring (201), welcher derart angeordnet ist, dass dieser dem ersten Laufbahnring (204) gegenübersteht und der an einem Rad angebracht ist; und
eine Vielzahl von Rollelementen (B1, B2), welche rollbar zwischen Laufbahnflächen (204s, 201) angeordnet sind, welche an einander gegenüberliegenden Oberflächen des ersten beziehungsweise des zweiten Laufbahnringes (204, 201) ausgebildet sind;
wobei zumindest einer des ersten und zweiten Laufbahnringes (204, 201) Flansche (204c, 202c) aufweist, mittels derer der zumindest eine des ersten und zweiten Laufbahnringes (204, 201) an dem Fahrzeugkörper oder dem Rad angebracht ist;
jeder der Flansche (204c, 202c) weist ein Bolzenbefestigungsloch (bolt mounting hole) (204n, 202n) auf, in welches ein Bolzen zur Befestigung des Fahrzeugkörpers oder des Rades montiert werden kann, und jeder der Flansche (204c, 202c) weist einen hervorstehende Abschnitt (230) auf, welcher in einer peripheren Region des Bolzenbefestigungsloches (204n, 202n) vorgesehen ist, das Herstellungsverfahren der Laufbahnringeinheit einer Lagereinheit enthält:
Formen eines intermediären Materials (CS), welches die Flansche (202c) enthält;
Durchführen eines Kaltausstanzprozesses (cold half die cutting out process) an jeder der peripheren Regionen in denen das Bolzenbefestigungsloch (202n) in dem Flansch (202c) ausgebildet ist, derart, dass es zu der Fahrzeugkörpermontageseite oder der Radmontageseite abragt; und
**dadurch gekennzeichnet, dass**
die periphere Region einen größeren Durchmesser als der Durchmesser des Bolzens aufweist, und zwar derart, dass diese in einer zylindrischen Form zu der Fahrzeugkörpermontageseite oder der Radmontageseite abragt, und
dadurch, dass das Herstellungsverfahren des weiteren ein Kaltstauchen (cold upsetting) jeder der peripheren Regionen enthält, welche nach dem Kaltausstanzschritt zu der Fahrzeugkörpermontageseite oder der Radmontageseite abragen, wobei der hervorstehende Abschnitt (230) durch den Kaltausstanzschritt und den Kaltstauchschritt gebildet wird, und lediglich der hervorstehende Abschnitt (230) kaltgestaucht ist.

2. Das Herstellungsverfahren einer Laufbahnringeinheit einer Lagereinheit nach Anspruch 1, wobei eine untere Pressform (SK) (lower die) und eine obere Pressform (UK) (upper die) in dem Kaltausstanzschritt benutzt werden, wobei die untere Pressform (SK) einen zylindrischen Halteraum (A1) zum Halten eines Schaftabschnittes (202a) des intermediären Materials (CS) aufweist und eine Vielzahl von Halteräumen (A2), die bei einer Ansicht von oben rechteckig sind, die mit dem Halteraum (A1) kommunizieren und unabhängig voneinander die jeweiligen Flansche (202c) halten, und des weiteren untere Pressen (P) enthält, welche mit einem vorgegebenen Höhengebiet in das Innere des jeweiligen Halteraumes (A2) ragen,
wobei die obere Pressform (SK) zylindrische Löcher (A3) aufweist, welche in dem selben Abschnitt wie die unteren Pressen (P) der unteren Pressform (SK) vorgesehen sind, und zwar derart, dass sie sich in eine Höhenrichtung derart erstrecken, so dass die hervorstehenden Abschnitte (230) hervorstehen, und wobei der Außendurchmesser jeder unteren Presse (P) gleich oder größer als der Durchmesser jedes zylindrischen Loches (A3) ist.

3. Das Herstellungsverfahren einer Laufbahnringeinheit einer Lagereinheit nach Anspruch 2, wobei der Durchmesser der flachen Oberfläche (P10) der oberen Endseite der unteren Presse (P), ausgenommen die gewölbte Oberfläche entlang der oberen Endkante (P1) der unteren Presse (P), gleich oder größer als der Durchmesser des Kopfteiles (202gt) des Bolzens (202g) und 1,5 mal oder weniger als der Durchmesser des Kopfteiles (202gt) des Bolzens (202g) ist.

4. Das Herstellungsverfahren einer Laufbahnringeinheit einer Lagereinheit nach Anspruch 1, wobei der zweite Laufbahnring (201) aus einem Nabenhauptkörper (202) und einem inneren Ring (203) gemacht ist, wobei der innere Ring derart vorgesehen ist, dass er an dem Nabenhauptkörper (202) montiert ist,
wobei der Nabenhauptkörper (202) einen Schaftabschnitt (202a) auf einer Seite der Flansche (202c) und einen zylindrische Positionierungsabschnitt (202h) auf der anderen Seite der Flansche (202c) zum positionieren des Rades enthält, wobei der zylindrische Positionierungsabschnitt (202h) koaxial zu dem Schaftabschnitt (202a) hervorsteht mit einem größeren Durchmesser als der Schaftabschnitt (202a), und
wobei das Herstellungsverfahren einer Laufbahnringeinheit einer Lagereinheit des Weiteren enthält einen Plättschritt (ironing step) zum fertigstellen des Außenumfangs des zylindrischen Positionierungsabschnittes (202h), wobei der Stauchschritt und der Plättschritt zur selben Zeit durchgeführt werden.

## Revendications

1. Procédé pour fabriquer un élément de bague de chemin de roulement d'unité de palier d'au moins l'une parmi une première et une seconde bague de chemin de roulement de l'unité de palier, l'unité de palier comprenant :
la première bague de chemin de roulement (204) qui est montée sur un corps de véhicule ;
la seconde bague de chemin de roulement (201) qui est disposée pour faire face à la première bague de chemin de roulement (204) et qui est montée sur une roue ; et
une pluralité d'éléments de roulement (B1, B2) qui sont disposés en roulement entre des surfaces de chemin de roulement (204s, 201) qui sont formées, respectivement, sur des surfaces en vis-à-vis des première et seconde bagues de chemin de roulement (204, 201) ;
dans lequel au moins l'une des première et seconde bagues de chemin de roulement (204, 201) a des brides (204c, 202c) sur lesquelles la au moins une des première et seconde bagues de chemin de roulement (204, 201) est montée sur le corps de véhicule ou la roue,
chacune des brides (204c, 202c) a un trou de montage de boulon (204n, 202n) dans lequel on prévoit de monter un boulon (202g) pour fixer le corps de véhicule ou la roue, et
chacune des brides (204c, 202c) comprend une partie en saillie (230) prévue sur une zone périphérique du trou de montage de boulon (204n, 202n),
le procédé de fabrication d'élément de bague de chemin de roulement d'unité de palier comprenant les étapes consistant à:
former un matériau intermédiaire (CS) comprenant les brides (202c) ;
réaliser un procédé de découpe de demi-moule à froid sur chacune des zones périphériques dans lequel chaque trou de montage de boulon (202n) est formé dans la bride (202c) afin de faire saillie vers le côté de montage de corps de véhicule ou le côté de montage de roue ; et
**caractérisé en ce que** la zone périphérique a un plus grand diamètre qu'un diamètre du boulon, afin de faire saillie de ce dernier dans une forme cylindrique vers le côté de montage du corps de véhicule ou le côté de montage de roue, et **en ce que** ledit procédé de fabrication comprend en outre l'étape consistant à :
refouler à froid chacune des zones périphériques qui font saillie vers le côté de montage du corps de véhicule après l'étape de coupe du demi-moule,
dans lequel la partie en saillie (230) est formée par l'étape de coupe de demi-moule et l'étape de refoulement à froid, et seule la partie en saillie (230) est refoulée à froid.

2. Procédé de fabrication d'élément de bague de chemin de roulement d'unité de palier selon la revendication 1, dans lequel un moule inférieur (SK) et un moule supérieur (UK) sont utilisés à l'étape de coupe de demi-moule,
dans lequel le moule inférieur (SK) comprend à l'intérieur de ce dernier, un espace de maintien cylindrique (A1) pour contenir une partie d'arbre (202a) du matériau intermédiaire (CS) et une pluralité d'espaces de maintien (A2), rectangulaires, lorsqu'ils sont observés de dessus, qui communiquent avec l'espace de maintien (A1) et maintiennent indépendamment les brides (202c) respectivement et comprend également des poinçons inférieurs (P) qui font respectivement saillie vers les intérieurs des espaces de maintien (A2) avec une zone de hauteur prédéterminée,
dans lequel le moule supérieur (UK) comprend des trous cylindriques (A3) qui sont prévus à la même phase que les poinçons inférieurs (P) du moule inférieur (SK) et afin de s'étendre dans une direction de hauteur pour amener les parties en saillie (230) à faire saillie, et
dans lequel le diamètre extérieur de chaque poinçon inférieur (P) est égal ou supérieur au diamètre de chaque trou cylindrique (A3).

3. Procédé de fabrication d'élément de bague de chemin de roulement d'unité de palier selon la revendication 2, dans lequel le diamètre de la surface plate (P10) de la face d'extrémité supérieure du poinçon inférieur (P), excluant la surface incurvée le long du bord d'extrémité supérieur (P1) du poinçon inférieur (P), est égal ou supérieur au diamètre d'une partie de tête (202gt) du boulon (202g) et représente 1,5 fois ou moins le diamètre de la partie de tête (202gt) du boulon (202g).

4. Procédé de fabrication d'élément de bague de chemin de roulement d'unité de palier selon la revendication 1, dans lequel la seconde bague de chemin de roulement (201) est composée d'un corps principal de moyeu (202) et d'une bague interne (203) qui est prévue afin d'être montée sur le corps principal de moyeu (202), dans lequel le corps principal de moyeu (202) comprend une partie d'arbre (202a) d'un côté des brides (202c) et une partie cylindrique de positionnement (202h) prévue de l'autre côté des brides (202c) pour positionner la roue, dans lequel la partie cylindrique de positionnement (202h) fait saillie de manière coaxiale avec la partie d'arbre (202a) avec un plus grand diamètre que la partie d'arbre (202a), et
dans lequel le procédé de fabrication d'élément de bague de chemin de roulement d'unité de palier comprend en outre une étape d'étirage pour finir la circonférence externe de la partie cylindrique de positionnement (202h), dans lequel l'étape de refoulement et l'étape d'étirage sont réalisées en même temps.
